## Europäisches Patentamt
## European Patent Office
## Office européen des brevets

(19)

(11) Publication number: **0 042 729**
**A1**

(12)

# EUROPEAN PATENT APPLICATION

(21) Application number: **81302742.2**

(22) Date of filing: **18.06.81**

(51) Int. Cl.³: **B 60 P 1/18**
**B 60 G 17/00**

(30) Priority: **19.06.80 GB 8020044**

(43) Date of publication of application:
**30.12.81 Bulletin 81/52**

(84) Designated Contracting States:
**BE CH DE FR GB IT LI NL SE**

(71) Applicant: **Sacol Powerline Limited**
**Commercial Road**
**Totton, Southampton SO4 3ZQ(GB)**

(72) Inventor: **Ware, Dennis Ernest**
**"Kyarra" Hythe Road**
**Marchwood Southampton, SO4 4WT(GB)**

(72) Inventor: **Cooper, Leslie Alan**
**"Woodstock" New Road**
**Portmore Lymington Hants(GB)**

(74) Representative: **Everitt, Christopher James**
**Wilders et al,**
**F.J. CLEVELAND & COMPANY 40/43 Chancery Lane**
**London WC2A 1JQ(GB)**

(54) Trailers, and a suspension system for such trailers.

(57) A trailer comprises a platform (11) suspended on one close-coupled pair of wheels (12 and 13) on either side. Two hydraulic jacks (18 and 52) on either side act between the platform (11) and a respective swinging suspension arm (16). The working fluid spaces of the jacks (18 and 52) are connected in a hydraulic circuit including a valve block, a liquid reservoir, a hand pump and one or two stop cocks. The stop cocks are left open when the trailer is set for towing so that liquid transfer between the working fluid spaces and the reservoir is allowed. The hand pump is operated with the stop cocks closed to extend or contract the jacks (18 and 52) to pivot the platform (11) when the trailer is stationary. The platform (11) is locked in any selected attitude for loading or unloading when the stop cocks are closed and the hand pump is not operated.

FIG.12

EP 0 042 729 A1

COMPLETE DOCUMENT

- 2 -

This invention relates to trailers which comprise a load bearing platform which is pivotally suspended on a wheel at either side of the vehicle. The invention also relates to a suspension system for such a trailer.

An object of this invention is to provide such a trailer which can be loaded with substantial loads, especially palletised loads which may be unsymmetrical, which has provision for adjusting the disposition of the platform relative to the wheels for loading and for facilitating hitching to a tractor vehicle, and which is substantially as effective on cross-country terrain off the road as it is on a road. Ground engaging means, such as jacks, jockey wheels and/or steadying struts have been found to be unreliable, and sometimes unusable on rough ground. This invention aims to avoid that problem.

According to one aspect of this invention there is provided a trailer comprising a load bearing platform which is pivotably suspended on one pair of wheels only at either side of the trailer by a respective independent suspension system, the wheels of each pair being close-coupled by respective independent coupling means; jacking means comprising at least one liquid pressure operable jack on either side of the trailer, each jack having working fluid spaces and acting between the platform and a link of the coupling means which is pivotable relative to the platform and which is on the same side of the trailer, liquid pressure pumping means and a low pressure liquid reservoir; conduit means interconnecting the pumping means, the reservoir and the working fluid spaces of the jacks; and shut-off valve means having a first condition in which displacement of liquid between working fluid spaces of the jacks and the reservoir can occur whereby movement of each said link relative to the platform when the trailer is running on its wheels is allowed, a second condition in which a change in length of each jack can be effected by operation of said pumping means whereby to cause pivotal movement of the platform relative to the wheels when the trailer is stationary, and a third condition in which liquid is locked in the working fluid spaces of the jacks whereby the platform can be locked against pivotal movement relative to the wheels when the trailer is stationary.

Preferably the conduit means by which the working fluid spaces of the jacks are interconnected include flow restricting means whereby fluid displacement from one of those working fluid spaces to another whilst the trailer is running on its wheels is damped. The flow restricting means may comprise a normally-closed pressure relief valve.

Each independent suspension system of the trailer may include at least one link of the coupling means by which the axle of each wheel is connected to the respective platform pivot, wherein the jacks comprise a pair of jacks, one on either side of the trailer, and the respective coupling means links to which said pair of jacks are connected are links by which the wheels of each close-coupled pair that are nearer one end of the trailer, say the front of the trailer, are connected to the respective platform pivot. There may be a further pair of jacks, one on either side of the trailer, included in said jacking means, and the respective coupling means links to which said further pair of jacks are connected may be links by which the other wheels of each close-coupled pair are connected to the respective platform pivot.

The respective coupling means link to which each jack is connected may be a swinging arm which carries a respective one of the wheels, or it may be a respective part of a beam which is pivotally mounted intermediate its ends on the respective platform pivot and which interconnects a pair of swinging arms which each carry a respective one of the respective pair of close-coupled wheels.

Each independent suspension system may include' shock absorbing damping means acting between the swinging arm by which the other wheel of the respective close-coupled pair of wheels is connected to the respective platform pivot and another part of the respective coupling means.

According to another aspect of this invention there is provided a trailer suspension system by which a load carrying platform is pivotally suspended on one pair of wheels only at either side of the trailer, comprising respective independent coupling means by which the wheels of each pair are close-coupled together and independent suspension means by which the platform is pivotally suspended on each pair of close-coupled wheels; jacking means comprising at least one liquid pressure operable jack on either side of the trailer, each jack having working fluid spaces and acting between the platform and a link of the respective coupling means which is pivotable relative to the platform and which is on the same side of the trailer, and liquid pressure pumping means and a low pressure reservoir; conduit means interconnecting the pumping means, the reservoir and the working fluid spaces of the jacks; and shut-off valve means having a first condition in which displacement of liquid between working fluid spaces of the jacks and the reservoir can occur whereby movement of each said link relative to the platform is allowed when the trailer is running on its wheels, a second condition in which a change in length of each jack can be effected by operation of said pumping means whereby to cause pivotal movement of the platform relative to the wheels when the trailer is stationary, and a third condition in which liquid is locked in the working fluid spaces of the jacks whereby the platform can be locked against pivotal movement relative to the wheels when the trailer is stationary.

Several forms of trailer in which this invention is embodied are now described by way of example with reference to the accompanying drawings, of which:-

Figure 1 is a diagrammatic side view of one of th forms of trailer with its load-bearing platform shown set substantially horizontally;

Figure 2 is a circuit diagram of the hydraulic suspension and jacking system that is fitted to the trailer illustrated in Figure 1;

Figure 3 is a sectioned view of the valve block of the hydraulic system shown in Figure 2;

Figure 4 is a view similar to Figure 1 but with the platform shown sloping downwards towards the front;

Figure 5 is a view similar to Figure 1 but with the platform shown sloping downwards towards the rear;

Figure 6 is a view illustrating the towing of the trailer in the condition shown in Figure 4;

Figure 7 is a view similar to Figure 4 of another of the forms of trailer;

Figure 8 is a view similar to Figure 5 of the trailer illustrated in Figure 7;

Figure 9 is a view similar to Figures 4 and 7 of yet another of the forms of trailer;

Figure 10 is a view similar to Figure 8 of the trailer illustrated in Figure 9;

Figure 11 is a view similar to Figure 1 of a similar trailer which is fitted with a different form of hydraulic suspension and jacking system;

Figure 12 is a perspective view of a practical form of the trailer shown in Figure 11 in which the four hydraulic jacks are connected each to the respective swinging arm rather than to the respective beam as shown in Figure 11; and

Figure 13 is a circuit diagram of the hydraulic suspension and jacking system that is fitted to the trailer illustrated in Figures 11 and 12.

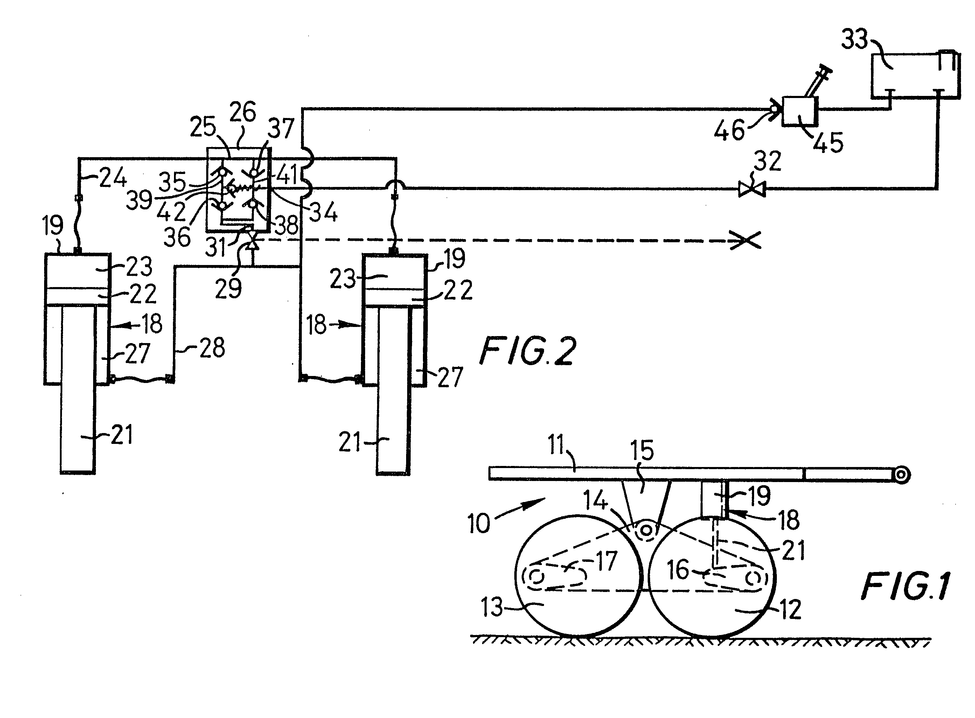

Figure 1 shows a trailer 10 which is symmetrical about its longitudinal axis. The trailer 10 comprises a load carrying platform 11 which is pivotally suspended on a close-coupled pair of

-8-

wheels 12 and 13 on either side by an independent suspension system.

The independent suspension system on either side of the trailer comprises a triangular beam 14 which is pivotally mounted at its apex on a fixed mounting 15 which depends from the platform 11. There is a swinging arm 16,17 pivotally mounted by one of its ends through a torsion bar at either end of the base of the beam 14 and carrying a stub axle for a respective one of the close-coupled pair of wheels 12 and 13 at its other end. Figure 1 shows that the front suspension arm 16 is a trailing arm and the rear suspension arm 17 a leading arm.

There is a single ended hydraulic jack 18 on either side of the trailer 10. Each jack 18 acts between the platform 11 and the respective arm 16 that carries the respective front wheel 12. The closed end of the cylinder casing 19 of each jack 18 is hinged to the underside of the platform 11 between the adjacent fixed mounting 15 and the front of the platform 11. The projecting end of the plunger rod 21 of each jack 18 is hinged to the respective swinging arm

16. The cross-sectional area of the plunger rod 21 of each jack 18 is approximately half the cross-sectional area of the bore of the cylinder casing 19 in which the piston head 22 of the plunger slides.

There is also a shock absorber damper (not shown) on each side of the trailer 10. Each damper acts between the beam 14 and the respective rear swinging arm 17 that carries the rear wheel 13.

The two hydraulic jacks 18 are part of a combined hydraulic suspension and jacking system which is fitted to the trailer 10. Figure 2 shows that the cylinder spaces 23 of the two jacks 18 that are each formed between the respective piston head 22 and the closed end of the cylinder casing 19 of the respective jack 18 are in direct communication with one another via suitable pipes which are indicated by the reference character 24 and a passage 25 through a valve block 26. Also the annular cylinder spaces 27 of the two jacks 18 are in communication with one another via suitable pipes which are indicated by the reference character 28.

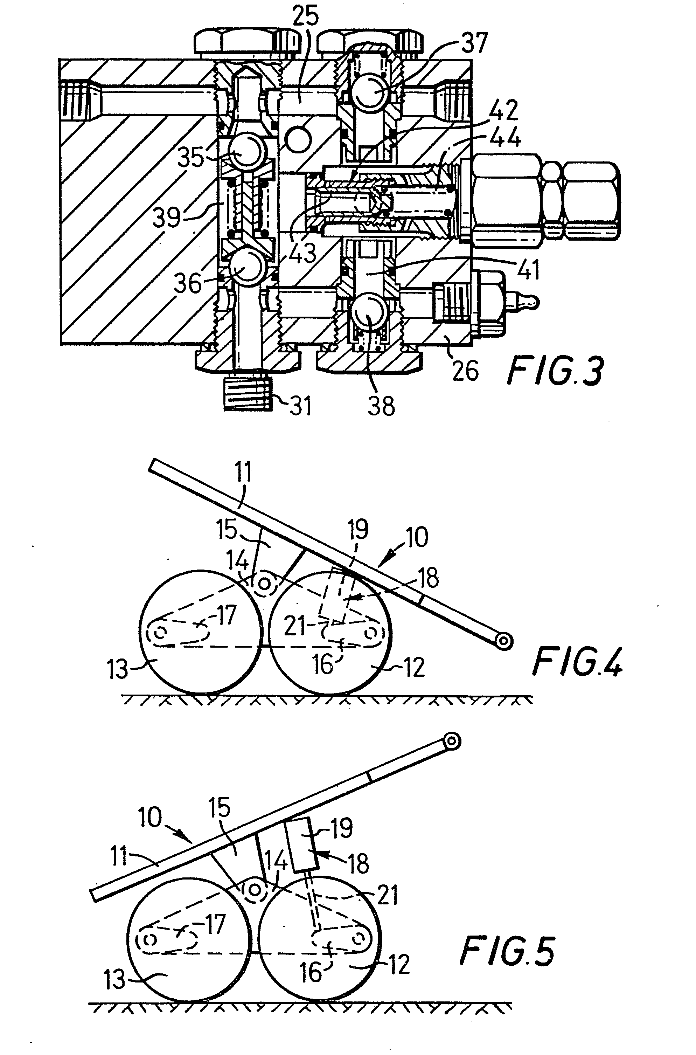

A manually operable stop cock valve 29 (e.g. a ball valve) controls communication between the pipes 28 and a first port 31 that is formed in the valve block 26. Another manually operable stop cock valve 32 controls communication between a liquid reservoir 33 and a second port 34 in the valve block 26. The first port 31 is connected in parallel with the through passage 25 by two passages which are formed in the valve block 26. There are two one-way liquid flow control valves 35 and 36, 37 and 38 in each of those two passages. The valves 35 and 36 in one of those passages allow liquid flow from either end of that passage to the central portion 39 of that passage that extends between them. The valves 37 and 38 in the other passage allow liquid flow towards the ends of that other passage from the central portion 41 of that other passage that extends between them. The central passage portion 41 is in communication with the second port 34. Normally the two central passage portions 39 and 41 are isolated from one another by a normally closed one-way liquid flow control valve 42,/which is a pressure relief valve and which has a spring loaded valve closure member 43 as is shown in Figure 3, but flow from the central passage portion 39 to the central passage portion 41 that communicates with the second port 34 occurs when the loading on the valve closure member 43 due to the pressure of liquid in the central passage portion 39 exceeds the load exerted by the closing spring 44 on that valve closure member 43.

Figure 2 shows that the system includes a manually operable pump 45 which has its inlet in communication with the reservoir 33 and its outlet in communication with the pipes 28 via a one-way liquid flow control valve 46.

The two stop cock valves 29 and 32 are set open when the trailer 10 is towed on its four wheels 12 and 13 by either a tractor vehicle or by a rope or cable. It should be understood that any tendency for the platform 11 to pivot about the pivot connections between its depending mountings 15 and the triangular beams 14 on each side is opposed by the coupling of its tow bar hitch to the tractor vehicle drawgear or by the tension of the rope or cable. The load exerted by the closing spring 44 is sufficient to hold the valve 42 closed when the wheels 12 and 13 are running on a level surface providing the trailer 10 is not overloaded. Hence a static volume of liquid is trapped within the part of the system that comprises the pipes 24, the through

-12-

passage 25, the cylinder spaces 23 that they interconnect and the central passage portion 39. That
volume of liquid is pressurised by

-13-

the weight of the platform 11 and its load. Hence that liquid pressure holds the valve 36 closed whilst being insufficient to open the valve 42. The valves 37 and 38 are held closed by respective closing springs and the central passage portion 41 is unpressurised, being in free communication with the reservoir 33. Hence a further volume of liquid is trapped within that part of the system that comprises the pipes 28, the annular cylinder spaces 27, the valve 29 and those parts of the passages that connect the first inlet 31 to the valves 36 and 38.

Liquid is displaced from both cylinder spaces 23 to the central passage portion 39 and is drawn into both annular cylinder spaces 27 from the central passage portion 41 simultaneously when the two front wheels 12 are both deflected upwards by a bump in the path of the trailer 10. That liquid displacement from the cylinder spaces 23 increases the liquid pressure that acts on the valve closure member 43 sufficiently to compress the closing spring 44 so that the volume of liquid displaced from the cylinder spaces 23 passes through the valve 42 to the

-14-

central passage portion 41, but at a restricted rate. The volume of liquid that is displaced from the cylinder spaces 23 is twice that that is drawn into the annular cylinder spaces 27 and the difference is returned to the reservoir 33. The change in length of the variable length struts that comprise the jacks 18 is damped both by the restrication to flow through the valve 42 and, to a lesser extent, by the natural restriction of the pipes of the system.

The liquid pressure tending to seat the valve 36 is relieved when the two front wheels 12 enter a hollow in the path of the trailer 10 because the cylinder spaces 23 are enlarged. Liquid is displaced from the annular cylinder spaces 27 and that displaced liquid unseats the valve 36 and enters the central passage portion 39, seating the valve 35. The consequent increase in pressure in the central passage portion 39 opens the normally-closed valve 42 so that the volume of liquid displaced from the annular cylinder spaces 27 passes through the valve 42 to the central passage portion 41 at a restricted rate. That liquid, together with the substantially equivalent volume of liquid drawn from the reservoir 33 via the second port 34 unseats the valve 37 to enter the through passage 25 from where it flows to the two cylinder spaces 23 via the pipes 24. Again the change in length of the struts is damped by both the restriction to flow through the valve 42 and, to a lesser extent, by the natural restriction of the pipes.

In the event that only one of the two front wheels 12 and 13 traverses a bump, the other front wheel 12 continuing to run on a level surface, liquid is displaced from the cylinder space 23 of the jack 18 on the same side of the trailer 10 as the deflected front wheel 12. That liquid is displaced to the central passage portion 39 through the open valve 35 so that the valve 42 opens to allow liquid to flow through it to the central passage portion 41. Half the volume of liquid displaced from the cylinder space 23 flows through the valves 38 and 29 to the annular cylinder space 27 of the respective jack 18, the remainder being returned to the reservoir 33. The length of the other jack 18 does not change so the level of the platform 11 is maintained substantially unaltered.

The operation of the system when the single contracted jack 18 is restored to its normal length by return of the deflected wheel 12 to the level running surface, or when one only of the jacks 18 is extended by downwards movement of the respective front wheel 12 relative to the level running surface, such as would occur if that wheel 12 dropped into a pothole, will be apparent from the foregoing description of other operational modes. In either mode the change in length of the jack 18 is damped by the restriction to flow through the valve 42 and by the natural restriction of the pipes.

The arrangement of the system whereby liquid is displaced from a cylinder space of the jack 18 on one side of the trailer to a cylinder space of the jack on the other side when a wheel on that one side is deflected relative to the others leads to the platform being stable even when the trailer is unhitched so that it can be towed over rough ground by a rope or cable.

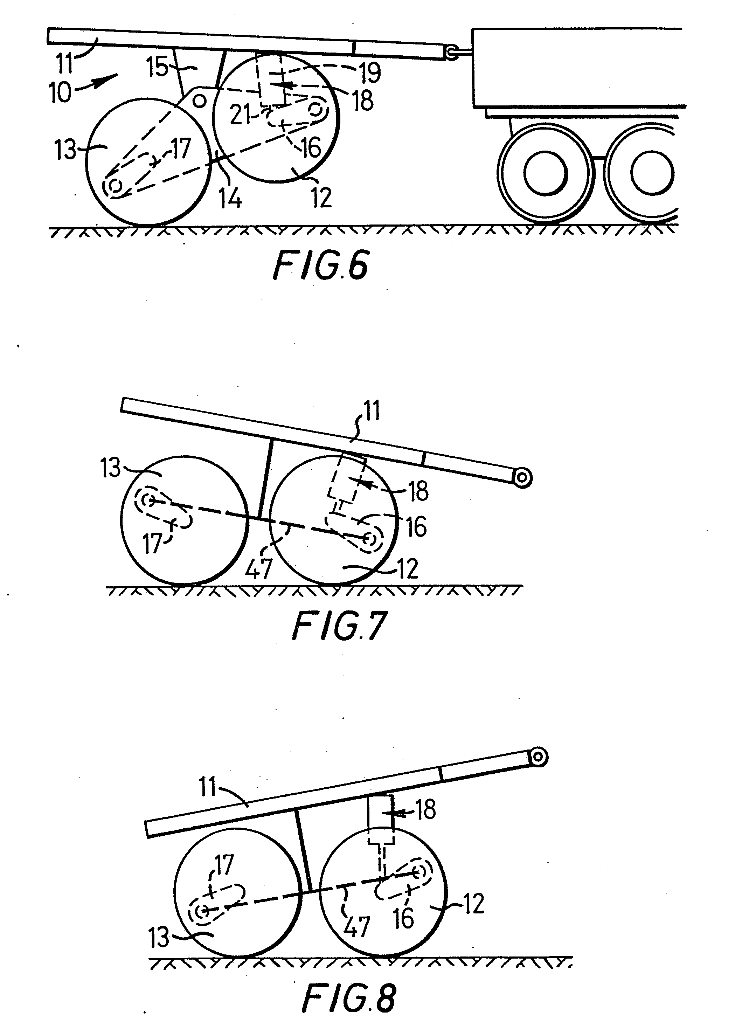

The disposition of the platform 11 relative to the four wheels 12 and 13 can be adjusted when the trailer 10 is stationary and unhitched as shown in Figures 4 and 5 without using ground engaging stabilising struts or a jockey wheel. This enables the height of the trailer hitch above the ground to be adjusted to suit the location of corresponding drawgear on a tractor vehicle. Also it enables an end of a loaded trailer to be lowered so that the load can be slid off the platform. A boat could be launched from the trailer in this way, and it could be recovered and reloaded when the platform attitude is the same. Furthermore, the platform 11 can be locked in any selected disposition relative to the wheels 12 and 13 so that loading and unloading of the trailer 10, especially with palletised loads which may not be symmetrical, is facilitated and so that the trailer 10 is braced for such loading. Moreover when unladen, the trailer 10 can be hitched to a tractor vehicle and one wheel on each side raised so that, as shown in Figure 6, the unladen trailer 10 can be towed with only one pair of wheels running on the ground, the other wheels being off the ground. Figure 6 shows the front wheels 12 off the ground but the rear wheels 13 may be off the ground and front wheels 12 running on the ground if the jacks 18 are extended rather contracted as shown in Figure 6. Also a damaged wheel can be raised for repair.

One of the two manually-operable stop cock valves 29 and 32 is closed, the other being left open, and the hand pump 45 is operated to pump liquid from the reservoir 33 into one of the cylinder spaces 23 or 27 of each jack 18 in order to change the length of the jacks 18 and adjust the disposition of the platform 11 relative to the wheels 12 and 13.

The stop cock valve 32 is closed if the jacks 18 are to be extended to raise the front of the platform 11 and lower the back as shown in Figure 4. The liquid pressure output of the pump 45 is fed through the open stop cock valve 29 and the one-way valve 36 into the central passage portion 39. That liquid pressure opposes unseating of the one-way valve 38 and seats the one-way valve 35. The closing spring 44 yields to allow the liquid to flow through the valve 42 into the central passage portion 41 and the one-way valve 37 is unseated to allow liquid to flow from the central passage portion 41 to the cylinder spaces 23 to extend the jacks 18. The liquid displaced from the annular cylinder spaces 27 joins the pump output flow through the valve 29.

The valve 29 is closed if the jacks 18 are to be contracted in length to raise the rear of the platform 11 and lower the front as shown in Figure 5. The liquid pressure output of the pump 45 is fed directly to the two annular cylinder spaces 27 to contract the jacks 18. The liquid displaced from the cylinder spaces 23 flows to the central passage portion 39 via the valve 35 and causes the valve closing spring 44 to yield so that it is fed through the normally-closed valve 42 and the open stop cock valve 32 to the reservoir 33.

The two stop cock valves 29 and 32 can be closed simultaneously to lock the platform 11 in any selected disposition. This facility enables the platform 11 to be supported in a stable manner when being loaded without using separate ground jacks, jockey wheels or steadying struts.

The level of the platform 11 can be adjusted during loading to compensate for deflection of the platform 11, which may occur when it is loaded unevenly, as well as for accompanying tyre and chassis deflection, such as may occur when the platform 11 is loaded with pallets starting from one corner of the platform 11. Such platform level adjustment is carried out by opening an appropriate one of the stop cock valves 29 and 32 and manipulating the pump handle little by little.

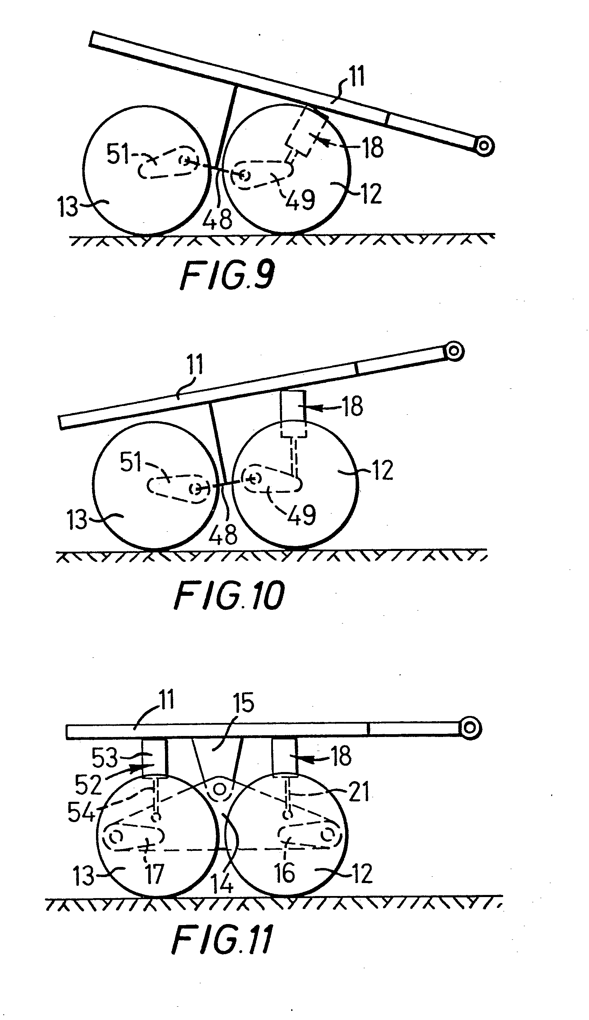

The combined jacking and suspension system just described can be applied to other forms of trailer comprising a load-carrying platform 11 which is pivotally suspended on a close-coupled pair of wheels 12 and 13 on either side by an independent suspension or a similar bogie type of suspension. Figures 7 and 8 show that the trailing arm 16 at the front on either side of the trailer can be coupled to the leading arm 17 at the rear on the same side of the trailer by a simple beam 47 which is rigidly fixed to the platform 11 instead of being pivotally connected to the platform 11 as is the triangular beam 14. Figures 9 and 10 show that a shorter simple beam 48 which is also rigidly fixed to the platform 11 can be used to couple a leading swinging arm 49 at the front with a trailing swinging arm 51 at the rear.

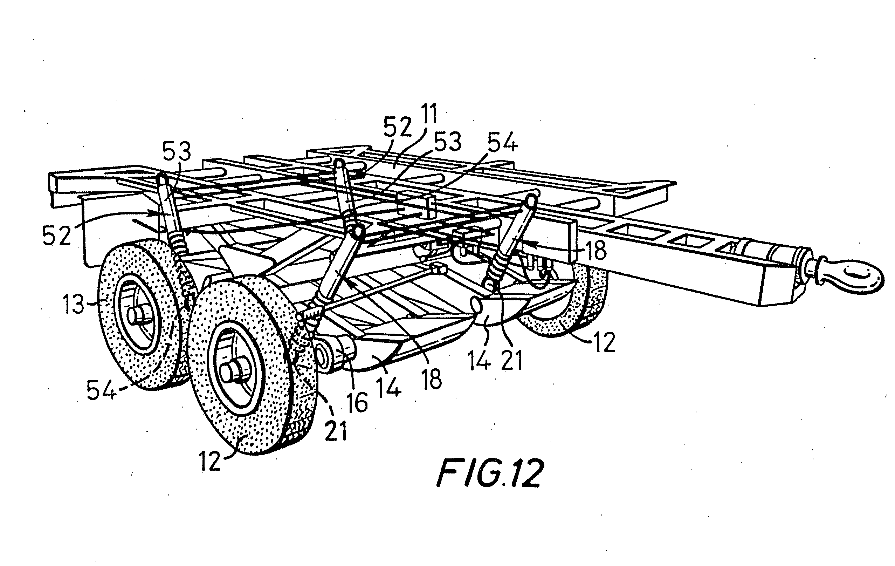

Figure 11 shows that the trailer 10 described above with reference to Figures 1 to 6 can be modified by the addition of a second hydraulic jack 52 on either side of the trailer. The closed end of the cylinder casing 53 of each second jack 52 is hinged to the underside of the platform 11 between the adjacent fixed mounting 15 and the rear of the platform 11. The projecting end of the plunger rod 54 of each jack 52 is hinged to the beam 14 between the pivot mounting at the apex of the beam 14 and the pivot mounting on the beam 14 of the swinging arm 17. Each second jack 52 is approximately equal in size to each jack 18. The projecting end of the plunger rod 21 of each jack 18 is also hinged to the beam 14 between the pivot mounting at the apex of the beam 14 and the pivot mounting on the beam 14 of the swinging arm 16.

The shock absorber dampers may be retained or may be omitted.

Figure 12 shows a trailer similar to that shown in Figure 11 but modified so that the projecting ends of the plunger rods 21 and 54 of each jack 18, 52 are hinged to the respective swinging arm 16, 17 as in the trailer illustrated in Figure 1, instead of being hinged to the beam 14 as in the trailer shown in Figure 11.

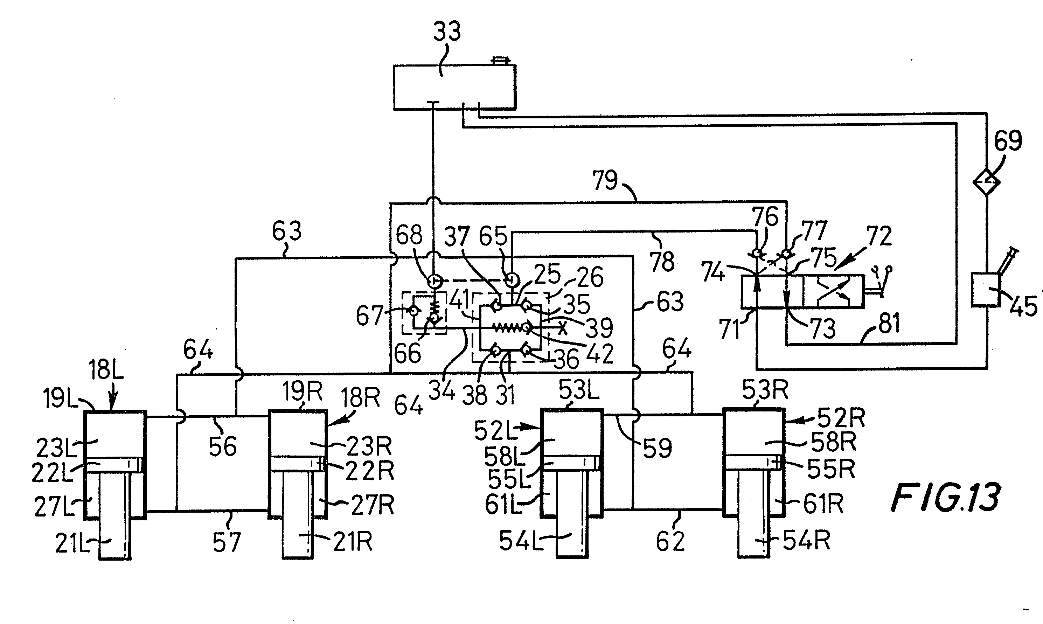

The four hydraulic jacks 18 and 52 are part of a combined hydraulic suspension and jacking system which is fitted to the trailer, be it the trailer shown in Figure 11 or the trailer shown in Figure 12. That system is illustrated diagrammatically in Figure 13 where, for clarity, the two jacks 18 and 52 and their component parts on the left of the trailer are identified by the additional character 'L' and the two jacks 18 and 52 and their component parts on the right of the trailer are identified by the character 'R'.

Figure 13 shows that the two cylinder spaces 23L and 23R are in direct communication with one another via a pipe 56, the two annular cylinder spaces 27L and 27R are in direct communication with one another via a pipe 57, the two larger cylinder spaces 58L and 58R of the second jacks 52L and 52R are in direct communication with one another via a pipe 59 and the two annular cylinder spaces 61L and 61R of those two second jacks 52L and 52R are in direct communication with one another via a pipe 62. Also the cylinder spaces 23L and 23R of the jacks 18L and 18R are in communication with the annular cylinder spaces 61L and 61R of the second jacks 52L and 52R via a pipe 63 which interconnects the pipes 56 and 62, and the annular cylinder spaces 27L and 27R of the jacks 18L and 18R are in communication with the cylinder spaces 58L and 58R of the second jacks 52L and 52R via a pipe 64 which interconnects the pipes 57 and 59.

The pipes 63 and 64 are interconnected through the valve block 26, which, although being shown in a different diagrammatic form in Figure 12 is functionally identical to the valve block 26 that is described above in detail with reference to Figures 2 and 3. The pipe 63 is connected to one end of the through passage 25 via a manually-operable stop cock valve 65. The other end of the through passage 25 is plugged. The pipe 64 is connected to the first port 31 of the valve block 26. The second port 34 is connected to the reservoir 33 via a normally-closed spring loaded pressure relief valve 66 which has a one-way liquid flow control valve 67 connected in parallel with it and a manually-operable stop cock valve 68 which is between the two valves 66 and 67 and the reservoir 33. The pressure relief valve 66 allows

- 23 -

0042729

liquid to flow towards the reservoir 33 when it opens and the one-way valve 67 allows liquid flow from the reservoir 33 to the valve block 26. The stop cock 68 is mechanically linked with the stop cock valve 65 so that they are either both open or both closed.

The two stop cock valves 65 and 68 are set open when the trailer is towed on its four wheels 12 and 13. As before, the closing spring load on the valve 42 is sufficient to hold that valve 42 closed when the four wheels 12 and 13 are running on a level surface and the trailer is not overloaded.

It should be remembered that the manner in which the jacks 18 and 52 are connected mechanically between the platform 11 and the respective beam 14 or swinging arm 16, 17 is such that when one of the jacks 18 and 52 on one side of the trailer extends the other jack 18 or 51 on the same side of the trailer contracts and vice versa.

-24-

Hence, for example, liquid is displaced from both cylinder spaces 23L and 23R of the front jacks 18 as well as from the two annular cylinder spaces 61L and 61R of the rear, or second jacks 52 when the front wheels 12 are both deflected upwards by a bump in the path of the vehicle. The total volume of liquid displaced, which is six times the volume of liquid displaced from one of the annular cylinder spaces 61, is fed to the central passage portion 39 of the valve block 26 via the pipe 63, the open stop cock valve 65, the passage 25 and the one-way valve 35. The pressure of that displaced liquid holds the one-way valves 36 and 37 seated and causes the closing spring 44 to yield so that the displaced volume of liquid passes through valve 42 to the central passage portion 41 at a restricted rate. The restricted liquid flow reaching the central passage portion 41 passes through the one-way valve 38, the first port 31, the pipe 64 and the pipes 57 and 59 to the annular cylinder spaces 27L and 27R of the front jacks 18 and the cylinder spaces 58L and 58R of the second jacks 52. There is no surplus liquid to be returned to the reservoir 33 nor any need for make up liquid to be drawn from the reservoir 33. As before, the change in length of the struts that comprise the jacks 18 and 52 is damped both by the restriction to flow through the valve 42 and by the natural restriction of the pipes of the system.

The operation of the system when both rear wheels 13 are deflected upwards, either because they both traverse a bump in the path of the trailer or because the front wheels 12 drop into a hollow in that path, or when only one of the wheels 12, 13 of the trailer is deflected upwards or downwards relative to the other three wheels of the trailer will be apparent from the foregoing description. It is possible for relative fluid displacement to take place between the two jacks 18 at the front as well as between the two jacks at the rear via the pipes 56, 57, 59 and 62 that crossconnect their corresponding cylinder spaces.

The one-way flow control valves 66 and 67 that are connected in parallel between the second port 34 of the valve block 26 and the manually-operable stop cock 68 are provided to allow for thermal expansion of the fluid, and any need to top up the fluid in the system to make up losses for reasons such as leakage, cavitation or thermal losses.

The system includes a hand pump 45 which has its inlet in communication with the reservoir 33 via a filter 69. The outlet of the pump 45 is connected to a pressure port 71 of a manually-operable changeover selector valve 72 which also has a drain port 73 and two other ports 74 and 75 which are each provided with a respective pilot operated check valve 76, 77. The port 74 is connected via its check valve 76 and a pipe 78 to the pipe 63 and the port 75 is connected via its check valve 77 and a pipe 79 to the pipe 64. The drain port 73 is connected to the reservoir 33 via a drain pipe 81.

The changeover valve 72 has one setting in which the pressure port 71 is connected to the port 74 and the drain port 73 is connected to the port 75 and another setting in which the pressure port 71 is connected to the port 75 and the drain port is connected to the port 74. The two check valves 76 and 77 are adapted to be unlocked automatically by the application of the output pressure of the handpump 45 at the pressure port 71.

The two manually operable stop cock valves 65 and 68 are closed when the system is set to operate to adjust the disposition of the platform 11 relative to the four wheels 12 and 13.

The selector valve 72 is set to connect the pressure port 71 to the port 74 in order to extend the jacks 18 and contract the second jacks 54 so that the front of the platform 11 is raised and the rear lowered. The handpump 45 is operated and its liquid pressure output is fed through the selector valve 72, thereby opening the two check valves 76 and 77, and through the pipes 78, 63, 56 and 62 into the larger cylinder spaces 23 of the two front jacks 18 and the annular cylinder spaces 61 of the two rear or second jacks 52. Hence the front jacks 18 are extended and the rear jacks 52 are contracted, liquid displaced from the annular cylinder spaces 27 of the front jacks 18 and from the larger cylinder spaces 58 of the rear jacks being directed to the reservoir 33 via the pipes 57, 59, 64 and 79, the open check valve 77, the selector valve 72 and the drain pipe 81.

The selector valve 72 is set in its other setting to connect the pressure port 71 to the port 75 in order to contract the front jacks 18 and extend the rear, or second jacks 52 so that the front of the platform 11 is lowered and the rear raised. The operation of the system to effect that adjustment of the disposition of the platform will be apparent from the foregoing description of the other jacking mode.

Either the front wheels 12 or the rear wheels 13 can be raised when the trailer is unladen and the trailer can be towed by a tractor whilst running on either the front wheels 12 or the rear wheels 13 only. Also any damaged wheel can be raised for repair. The platform 11 is locked in its selected disposition when the manually-operable valves 65 and 68 are closed and the pump 45 is not operated, due to the action of the check valves 76 and 77.

Only one manually-operable stop cock is required in the hydraulic circuit shown in Figure 13 if it is fitted in series with the normally-closed one-way pressure relief valve 42 between that valve 42 and the central passage portion 39. The manually-operable stop cocks 65 and 68 would then be redundant and should be omitted.

Provision could be made for each jack 18, 52 to be isolated from the remainder of the system. The valve block 26 may incorporate additional restricting means in series with the valve 42 or may be dispensed with if adequate restriction is provided by the pipes of the system.

Heat is dissipated in the system whilst the trailer is being towed and the amount of such heat dissipation is greater than would be achieved in a similar suspension system that incorporates conventional shock absorbing dampers that are independent one from the others.

CLAIMS

1.    A trailer (10) comprising a load bearing platform (11) which is pivotably suspended on one pair of wheels (12 and 13) only at either side of the trailer (10) by a respective independent suspension system, the wheels (12 and 13) of each pair being close-coupled by respective independent coupling means; characterised by the provision of jacking means comprising at least one liquid pressure operable jack on either side of the trailer (10), each jack having working fluid spaces and acting between the platform (11) and a link of the coupling means which is pivotable relative to the platform (11) and which is on the same side of the trailer (10), liquid pressure pumping means (45) and a low pressure liquid reservoir (33); conduit means interconnecting the pumping means (45), the reservoir (33) and the working fluid spaces; and shut-off valve means (29 and 32; 65 and 68) having a first condition in which displacement of liquid between working fluid spaces of the jacks and the reservoir (33) can occur whereby movement of each said link relative to the platform (11) when the trailer (10) is running on its wheels (12 and 13) is allowed, a second condition in which a change in length of each jack can be effected by operation of said pumping means (45) whereby to cause pivotal movement of the platform (11) relative to the wheels (12 and 13) when the trailer (10) is stationary, and a third condition in which liquid is locked in the working fluid spaces of the jacks whereby the platform (11) can be locked against pivotal movement relative to the wheels (12 and 13) when the trailer (10) is stationary.

2. A trailer (10) according to Claim 1, wherein said conduit means by which the working fluid spaces are interconnected include flow restricting means whereby liquid displacement from one of those working fluid spaces to another whilst the trailer (10) is running on its wheels (12 and 13) is damped.

3 A trailer (10) according to Claim 2, wherein the flow restricting means comprise a normally-closed pressure relief valve (42).

4. A trailer (10) according to any one of Claims 1 to 3, wherein each independent suspension system includes at least one link of the coupling means by which the axle of each wheel (12, 13) is connected to the respective platform pivot, wherein the jacks comprise a pair of jacks (18), one on either side of the trailer (10), and the respective coupling means links by which said pair of jacks (18) are connected are links by which the wheels of each close-coupled pair (12 and 13) that are nearer one end of the trailer (10) are connected to the respective platform pivot.

5.      A trailer (10) according to Claim 4, wherein said one end of the trailer (10) is the front of the trailer (10).

6.      A trailer (10) according to Claim 4 or Claim 5, wherein said jacking means include a further pair of jacks (52), one on either side of the trailer (10), and the respective coupling means links to which said further pair of jacks (52) are connected are links by which the other wheels (13) of each close-coupled pair (12 and 13) are connected to the respective platform pivot.

7.      A trailer (10) according to any one of Claims 1 to 6, wherein the respective coupling means link to which each jack (18, 52) is connected is a swinging arm (16, 17, 49) which carries a respective one of the wheels (12 and 13).

8.      A trailer (10) according to any one of Claims 1 to 6, wherein the respective coupling means link is a respective part of a beam (14) which is pivotally mounted intermediate its ends on the respective platform pivot (15) and which interconnects a pair of swinging arms (16 and 17) which each carry a respective one of the respective pair of close-coupled wheels (12 and 13).

9. A trailer (10) according to any one of Claims 1 to 8, wherein each independent suspension system includes shock absorbing damping means acting between the swinging arm (17, 51) by which the other wheel (13) of the respective close-coupled pair of wheels (12 and 13) is connected to the respective platform pivot and another part of the respective coupling means.

10. A trailer according to either of Claims 4 and 5 when appended to Claim 2 or any one of Claims 7 to 9 when appended to Claim 2 and Claim 4, wherein the working fluid spaces of each jack (18) comprise an annular chamber (27) and a larger chamber (23), said conduit means comprise a first conduit (28) interconnecting the two annular chambers (27), a second conduit (24 and 25) interconnecting the larger chambers (23), further conduits interconnecting the first and second conduits (27 and 28), a return conduit connecting said further conduits to the reservoir (33) via said flow restricting means and a pressure conduit connecting the liquid pressure pumping means (45) to said first conduit (28), and said shut-off valve means comprise one manually-operable stop cock (29) in said further conduit means between said first conduit (28) and both said second conduit (25 and 26) and said return conduit, and another manually-operable stop cock (32) in said return conduit.

11. A trailer according to Claim 6 when appended to Claim 2, wherein the working fluid spaces of each jack (18, 52) comprise an annular chamber (27, 61) and a larger chamber (23, 58), said conduit means comprise a respective first conduit (57, 62) interconnecting the annular chambers (27, 61) of each pair of jacks (18, 52), a respective second conduit (56, 59) interconnecting the larger chambers (23, 58) of each pair of jacks (18, 52), third and fourth conduits (63 and 64) respectively interconnecting the first conduit (57, 62) of each of the pairs of jacks (18, 52) with the second conduit (56, 59) of the other pair of jacks (18, 52), and further conduits interconnecting the third and fourth conduits (63 and 64) and a first return conduit leading to the reservoir (33) via the flow restricting means, there being a second return conduit 81 leading to the reservoir (33) from a changeover valve (72) and a pressure conduit connecting the liquid pressure pumping means (45) to the changeover valve (72) and two conduits connecting the changeover valve (72) respectively to said third and fourth conduits (63 and 64), said shut-off valve means comprising one way valves (76 and 77) in the conduits connecting the changeover valve (72) to said third and fourth conduits (63 and 64) and at least one manually-operable stop cock (65, 68) in said further conduit means and/or said first return conduit.

12. A trailer according to Claim 11, wherein said at least one manually-operable stop cock comprises a single stop cock in said first return conduit upstream of said flow restricting means (42).

13. A trailer suspension system by which a load carrying platform (11) is pivotally suspended on one pair of wheels (12 and 13) only at either side of the trailer (10), comprising respective independent coupling means by which the wheels (12 and 13) of each pair are close-coupled together and independent suspension means by which the platform (11) is pivotally suspended on each pair of close-coupled wheels (12 and 13); at least one liquid pressure operable jack (18, 52) on either side of the trailer (10), each jack (18, 52) having working fluid spaces (23 and 27, 58 and 61) and acting between the platform (11) and a link (14, 16, 17, 49) of the respective coupling means which is pivotable relative to the platform (11) and which is on the same side of the trailer (10), and liquid pressure pumping means (45) and a low pressure liquid reservoir (33); conduit means interconnecting the pumping means (45), the reservoir (33) and the working fluid spaces (23 and 27, 58 and 61) of the jacks (18, 52); and shut-off valve means (29 and 32, 65 and 68) having a first condition  in which displacement of liquid between working fluid spaces (23 and 27, 58 and 61) of the jacks (18, 52) and the reservoir (33) can occur whereby movement of each said link (14, 16, 17, 49) relative to the platform (11) is allowed when the trailer (10) is running on its wheels (12 and 13), a second condition in which a change in length of each jack (18, 52) can be effected by operation of said pumping means (45) whereby to cause pivotal movement of the platform (11) relative to the wheels (12 and 13) when the trailer (10) is stationary, and a third condition in which liquid is locked in the working fluid spaces (23 and 27, 58 and 61) of the jacks (18, 52) whereby the platform (11) can be locked against pivotal movement relative to the wheels (12 and 13) when the trailer (10) is stationary.

FIG.2

FIG.1

0042729

FIG.3

FIG.4

FIG.5

FIG.6

FIG.7

FIG.8

FIG.9

FIG.10

FIG.11

FIG.12

FIG.13

European Patent Office

**EUROPEAN SEARCH REPORT**

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE - A1 - 2 546 485 (SCHMIDT)<br>* fig. 1 to 6 *<br>--<br>US - A - 3 361 440 (GREEN)<br>* fig. 1 to 6 *<br>--<br>GB - A - 895 689 (AIRTECH)<br>---- | 1<br><br>1 | B 60·P 1/18<br>B 60 G 17/00 |
| A | | | |

TECHNICAL FIELDS SEARCHED (Int. Cl.³)

B 60 G 17/00

B 60 P 1/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search<br>Berlin | Date of completion of the search<br>11-09-1981 | Examiner<br>LUDWIG | |